# EUROPÄISCHE PATENTSCHRIFT

(11) **EP 3 678 895 B1**
(45) Veröffentlichungstag und Bekanntmachung des Hinweises auf die Patenterteilung: **19.04.2023**
(21) Anmeldenummer: 18765865.3
(22) Anmeldetag: 06.09.2018
(51) Int. Cl.: B60N 2/08

(54) **BETÄTIGUNGSMECHANISMUS FÜR EINEN LÄNGSEINSTELLER UND LÄNGSEINSTELLER FÜR EINEN FAHRZEUGSITZ SOWIE FAHRZEUGSITZ**
ACTUATION MECHANISM FOR A LONGITUDINAL ADJUSTER, LONGITUDINAL ADJUSTER FOR A VEHICLE SEAT, AND VEHICLE SEAT
MÉCANISME DE COMMANDE D'UN DISPOSITIF DE RÉGLAGE LONGITUDINAL ET DISPOSITIF DE RÉGLAGE LONGITUDINAL D'UN SIÈGE DE VÉHICULE AINSI QUE SIÈGE DE VÉHICULE

(30) Priorität: 06.09.2017 DE 102017215640
(43) Veröffentlichungstag der Anmeldung: 15.07.2020
(73) Patentinhaber: KEIPER Seating Mechanisms Co., Ltd., Shanghai, 201315 (CN)
(72) Erfinder: FLICK, Joachim, 42499 Hückeswagen (DE); SPRENGER, Erik, 42929 Wermelskirchen (DE)
(74) Vertreter: Kutzenberger Wolff & Partner
(86) Internationale Anmeldenummer: PCT/EP2018/073941
(87) Internationale Veröffentlichungsnummer: WO 2019/048519

(56) Entgegenhaltungen:
- DE-A1-102015 220 262
- DE-B3-102004 056 430
- DE-T2- 69 800 131

## Beschreibung

Die Erfindung betrifft einen Betätigungsmechanismus für einen Längseinsteller, einen Längseinsteller für einen Fahrzeugsitz und einen Fahrzeugsitz mit einem solchen Längseinsteller.

Ein Längseinsteller der genannten Art ist beispielsweise aus der DE 10 2006 021 884 B3 bekannt. Hierbei sind eine erste, mit der Fahrzeugstruktur verbundene Sitzschiene und eine zweite, mit der Sitzstruktur verbundene Sitzschiene vorgesehen, welche sich wechselseitig umgreifen und relativ zueinander in Längsrichtung beweglich sind. Ferner sind eine Schienenverriegelung, welche weitgehend innerhalb des Schienenprofils angeordnet ist, und eine außerhalb des Schienenprofils angeordnete, bei Betätigung auf die Schienenverriegelung einwirkende Entriegelungsklappe vorgesehen. Aus der DE 10 2008 058 518 A1 ist eine Betätigungsanordnung für eine Schienenverriegelung bekannt, die über einen Hebel von außen in eine Öffnung in der Sitzschiene eingesteckt ist.

Des Weiteren ist aus der DE 10 2015 220 262 A1 ein Betätigungsmechanismus für einen Fahrzeugsitz bekannt.

Aufgabe der vorliegenden Erfindung ist es, einen Betätigungsmechanismus für einen Längseinsteller, einen verbesserten Längseinsteller für einen Fahrzeugsitz sowie einen Fahrzeugsitz mit einem solchen verbesserten Längseinsteller anzugeben.

Der erfindungsgemäße Betätigungsmechanismus für einen Längseinsteller eines Fahrzeugsitzes, wobei der Längseinsteller eine obere Schiene und eine untere Schiene umfasst, die mittels mindestens zweier Verriegelungseinheiten miteinander verriegelbar sind, und wobei der Betätigungsmechanismus zumindest einen Betätigungsarm, einen Auslösehebel und ein am Auslösehebel angeordnetes Positionierelement umfasst, das an einem freien Hebelende des Auslösehebels schwenkbeweglich gelagert ist.

In einer möglichen Ausführungsform ist das Positionierelement in Form einer Wippe oder wippenähnlich ausgebildet. Dabei kann das Positionierelement auf dem Auslösehebel vormontiert werden, beispielsweise gesteckt, gerastet oder geklipst werden.

In einer weiteren Ausführungsform ist das Positionierelement außerhalb der Schienen angeordnet und steht mit einem im Innenraum zwischen den Schienen angeordneten Führungselement im Wirkzusammenhang steht, wobei das Führungselement mit der Verriegelungseinheit gekoppelt ist.

Die mit der Erfindung erzielten Vorteile bestehen insbesondere darin, dass das Positionierelement auf dem Auslösehebel vormontiert werden kann. Zudem können komplette Sitzseitenteile vor dem Beschichten an der Oberschiene befestigt werden und anschließend die Schiene problemlos montiert werden. Zudem dient das Führungselement als Kippwinkelbegrenzer.

Das Positionierelement ist insbesondere als eine Wippe oder ein wippenähnliches Element ausgebildet. Eine weitere Ausführungsform sieht vor, dass das Positionierelement beispielsweise aus einem festen, insbesondere verstärktem Kunststoff in Kombination mit einem Elastomer gebildet ist. Hierdurch ist das Positionierelement sowohl zur Sicherstellung der Entriegelungskräfte aufgrund des festen Kunststoffs als auch zur Dämpfung von Ver- oder Entriegelungsgeräuschen aufgrund des Elastomer und zur einfachen Befestigung des Positionierelements auf dem Auslösehebel ausgebildet.

Erfindungsgemäß ist der feste, insbesondere hochfeste Kunststoff zur Dämpfung von Ver- oder Entriegelungsgeräuschen mit einem elastischen Material versehen. Erfindungsgemäß ist das Positionierelement als ein Zweikomponenten-Bauteil, zum Beispiel ein Zweikomponenten-Spritzgussbauteil ausgebildet. Erfindungsgemäß ist das Positionierelement aus einem innenliegenden elastischen Material und einem von diesem umgebenden festen Kunststoff gebildet.

Erfindungsgemäß weist das Positionierelement im Bereich des innenliegenden elastischen Materials einen Anbindungsbereich auf, mittels welchem das Positionierelement form- oder kraftschlüssig am Auslösehebel befestigbar, insbesondere vormontierbar ist. Beispielsweise kann der Anbindungsbereich des Positionierelements und ein Kopplungsbereich des Auslösehebels derart ausgebildet sein, dass eine Steck-Rastverbindung gebildet ist. Somit kann das Positionierelement durch Aufstecken und Verrasten an dem Auslösehebel vormontiert werden.

Die Verriegelungseinheit ist beispielsweise durch zwei Verriegelungselemente, insbesondere Rastplatten gebildet. Wenn eine der beiden Rastplatten beispielsweise durch erhöhte Längslast beim Entriegeln eine erhöhte Entriegelungskraft benötigen sollte, entriegeln die beiden Rastplatten mittels der Kopplung von Positionierelement und Führungsbolzen möglichst parallel. Dabei ist je Rastplatte ein Führungsbolzen vorgesehen. Das Positionierelement in Form einer Wippe beispielsweise greift dabei mit dem jeweiligen Wippenende an einem der Führungsbolzen und somit eine der Rastplatten zur Entriegelung ein.

Die Erfindung ermöglicht eine vereinfachte Montage nach dem Beschichtungsprozess. Die Verriegelungselemente, insbesondere Rastplatten, können vor dem Aufschweißen oder Aufnieten von Adapter oder Sitzseitenteile montiert und dann auch beschichtet werden. Nach dem Beschichtungsprozess sind dann keine gegebenenfalls durch Sitzseitenteile eingeschränkte vertikale Montageprozesse erforderlich.

Ein weiterer Aspekt sieht einen Längseinsteller für einen Fahrzeugsitz vor. Der Längseinsteller umfasst eine obere Schiene und eine untere Schiene, die mittels mindestens zweier Verriegelungselemente miteinander verriegelbar sind, und einen Betätigungsmechanismus zur Betätigung der Verriegelungselemente, wie er zuvor beschrieben ist.

In einer möglichen Ausführungsform ist das Positionierelement außerhalb der Schienen angeordnet und steht mit mindestens einem im Innenraum zwischen den Schienen angeordneten Führungselement im Wirkzusammenhang. Dabei kann je Verriegelungselement ein Führungselement, insbesondere ein Pin oder Stift, vorgesehen sein. Auch können je Verriegelungselement mehr als ein, insbesondere zwei Führungselemente vorgesehen sein.

Darüber hinaus werden die Verriegelungselemente beim Entriegeln oder Verriegeln mittels des Führungselements in Entriegelungsrichtung in der oberen Schiene gegen ein Verkippen zwangsgeführt.

Die Führungselemente des jeweiligen Verriegelungselementes sind beispielsweise derart von der Rotationsachse oder Gelenkachse des Positionierelementes beabstandet, dass sich das Positionierelement beim Entriegeln selbst zentriert.

Des Weiteren ist ein Fahrzeugsitz mit einem Längseinsteller vorgesehen, wie er zuvor beschrieben wird.

Ausführungsbeispiele der Erfindung werden anhand von Zeichnungen näher erläutert. Dabei zeigen:
- Figur 1: schematisch in perspektivischer Darstellung zwei Schienenpaare mit Betätigungsmechanismus für einen Längsversteller,
- Figuren 2 bis 7: schematisch im Längsschnitt eine mögliche Ausführungsform für einen verbesserten Betätigungsmechanismus eines Längsverstellers mit einem der Schienenpaare mit oberer Schiene und unterer Schiene und einer im Innenraum zwischen diesen Schienen angeordneten Verriegelungseinheit und einem äußeren Positionierelement zur Entriegelung der Verriegelungseinheit, und
- Figuren 8 bis 10: schematisch in verschiedenen Darstellungen eine weitere Ausführungsform für einen verbesserten Betätigungsmechanismus eines Längsverstellers.

Einander entsprechende Teile sind in allen Figuren mit den gleichen Bezugszeichen versehen.

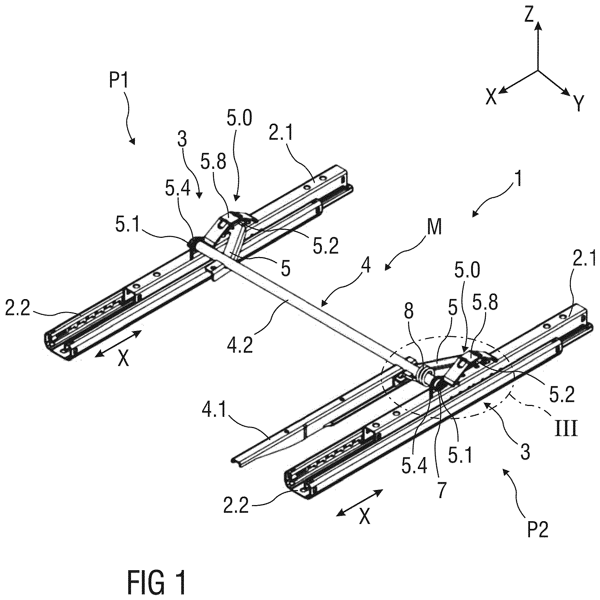

**Figur 1** zeigt schematisch in perspektivischer Darstellung einen Längseinsteller 1 mit einem Betätigungsmechanismus 4.

Der Längseinsteller 1 dient zur manuellen Längseinstellung eines Sitzes, insbesondere eines Fahrzeugsitzes. Der Längseinsteller 1 stellt dabei eine Sitzlängsposition des nicht näher dargestellten Fahrzeugsitzes ein. Der Längseinsteller 1 umfasst ein Schienensystem 2. Das Schienensystem 2 umfasst zwei Schienenpaare P1, P2 mit jeweils zwei Schienen 2.1, 2.2. Auf jeder Fahrzeugsitzseite ist ein Schienenpaar P1 oder P2 angeordnet.

Dabei ist eine der Schienen 2.1 des jeweiligen Schienenpaares P1, P2 sitzfest am Fahrzeugsitz befestigt. Die jeweils andere der Schienen 2.2 ist fahrzeugfest ausgebildet und mit einer Fahrzeugstruktur, insbesondere dem Fahrzeugboden, verbunden.

Die beiden Schienen 2.1, 2.2 umgreifen einander wechselseitig unter Bildung eines Schienenprofils mit einem Innenraum I und sind relativ zueinander in Längsrichtung X beweglich, wobei zwischen den beiden Schienen 2.1, 2.2 zur Verringerung der Reibung Kugeln (nicht dargestellt) angeordnet sind.

Bevorzugt weist der erfindungsgemäße Längseinsteller 1 in der Regel zwei Schienenpaare P1, P2 mit jeweils einer Ober- und einer Unterschiene als obere Schiene 2.1 und untere Schiene 2.2 auf.

Die beiden Schienen 2.1, 2.2 sind miteinander mittels einer Schienenverriegelung 3 verriegelbar. Die Schienenverriegelung 3 ist innerhalb des Schienenprofils im Innenraum I angeordnet und kann beliebig ausgestaltet sein, beispielsweise als eine Rastplatte oder ein Rasthebel oder eine Rastklinke.

Die Schienenverriegelung 3 ist mittels eines Betätigungsmechanismus 4, der zumindest teilweise außerhalb der Schienen 2.1, 2.2 angeordnet ist, lösbar und betätigbar. Der Betätigungsmechanismus 4 zur Betätigung, insbesondere Entriegeln oder Lösen, der Schienenverriegelung 3 kann verschiedenartig ausgebildet sein und umfasst einen Betätigungsarm 4.1, wie er in Figur 1 dargestellt ist.

Dabei ist der Betätigungsarm 4.1 als ein einarmiger Handgriff ausgebildet. Alternativ kann der Betätigungsarm 4.1 als ein Handbügel ausgebildet sein (nicht näher dargestellt). Der Betätigungsarm 4.1 ist derart ausgestaltet, dass dieser am vorderen Ende des Fahrzeugsitzes hervorragt und von einem Nutzer betätigt werden kann.

Der Betätigungsmechanismus 4 umfasst einen Auslösemechanismus 5.0. Der Auslösemechanismus 5.0 ist zwischen dem Betätigungsarm 4.1 und der Schienenverriegelung 3 angeordnet und koppelt diese derart miteinander, dass bei einer Betätigung des Betätigungsarmes 4.1 die Schienenverriegelung 3 gelöst und entriegelt wird, so dass eine der Schienen 2.1, 2.2 relativ zur anderen bewegt werden kann.

Der Auslösemechanismus 5.0 umfasst einen Auslösehebel 5, der an einem Ende mit dem Betätigungsmechanismus 4, insbesondere einem Betätigungsarm 4.1, gekoppelt, insbesondere verbunden ist. Das gegenüberliegende Ende des Auslösehebels 5 ist mit mindestens einem Positionierelement 5.2 gekoppelt, insbesondere verbunden.

Der Betätigungsarm 4.1 ist drehfest mit einer Querstange 4.2 verbunden, die wiederum endseitig in einem Anbindungsbereich 5.1 an der jeweiligen Oberschiene 2.1 eines jeden Schienenpaares P1, P2 drehbar gelagert ist. Hierzu umfasst der jeweilige Anbindungsbereich 5.1 eine Lagerbuchse 7 für die Querstange 4.2. Der Anbindungsbereich 5.1 ist beispielsweise als eine Haltelasche oder Haltefahne ausgebildet und ist an der Schiene 2.1 befestigt.

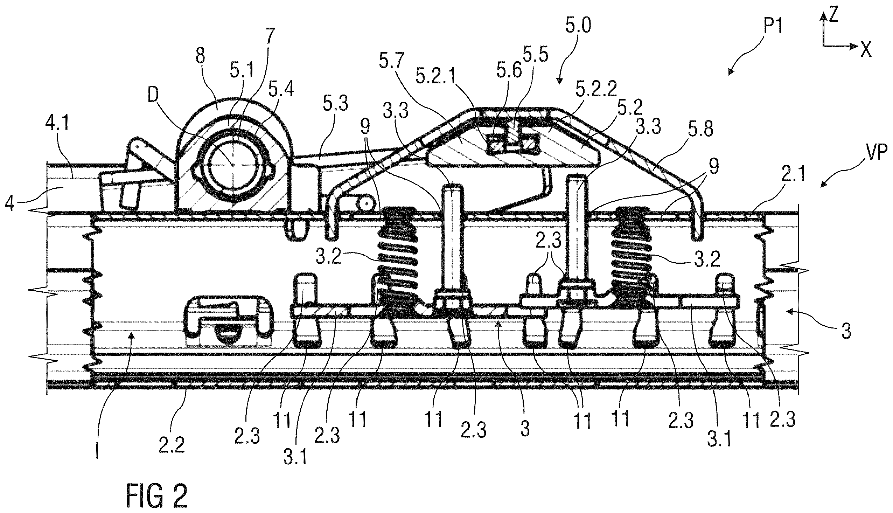

**Figuren 2 bis 6** zeigen schematisch im Längsschnitt eines der Schienenpaare P1 mit oberer Schiene 2.1 und unterer Schiene 2.2 und einer im Innenraum I zwischen diesen angeordneten Verriegelungseinheit 3 und einem äußeren Positionierelement 5.2 zur Entriegelung der Verriegelungseinheit 3.

Das Positionierelement 5.2 liegt außerhalb des Schienenpaares P1.

Die Schienenverriegelung 3 weist im Ausführungsbeispiel zwei als Rastplatten ausgebildete Verriegelungselemente 3.1 auf, welche beweglich an einer der Schienen 2.1, 2.2, insbesondere an der oberen Sitzschiene 2.1, angeordnet sind und jeweils mittels einer Feder 3.2 im verriegelten Zustand der Sitzschienen 2.1, 2.2 gehalten sind. Die Federn 3.2 sind beispielsweise als Rückstellfedern ausgebildet. Die Federn 3.2 sind im verriegelten Zustand (Verriegelungsposition VP) gespannt, um das Verriegelungselement 3.1 im verriegelten Zustand zu halten. Die Federn 3.2 werden beim Entriegeln und Verstellen der Verriegelungselemente 3.1 weiter gespannt. Die Federkraft im verriegelten Zustand ist dabei geringer als die Federkraft im entriegelten Zustand. Die Federkraft im verriegelten Zustand ist insbesondere derart gewählt, dass das Verriegelungselement 3.1 im Wesentlichen in einem festen Zustand gehalten ist, um ein Klappern beispielsweise zu vermeiden. Beim Loslassen des Betätigungsarms 4.1 zur Entriegelung werden somit die Verriegelungselement 3.1 selbsttätig mittels der Federn 3.2 in den verriegelten Zustand (Verriegelungsposition VP) gestellt.

Im verriegelten Zustand greifen Verriegelungszähne 11 der Verriegelungselemente 3.1 in die beiden Schienen 2.1, 2.2, beispielsweise in schlitzförmige Schienenöffnungen 2.3, ein, so dass die Schienen 2.1, 2.2 relativ zueinander verriegelt sind und eine Bewegung einer der Sitzschienen 2.1 relativ zur anderen Sitzschiene 2.2 gesperrt ist.

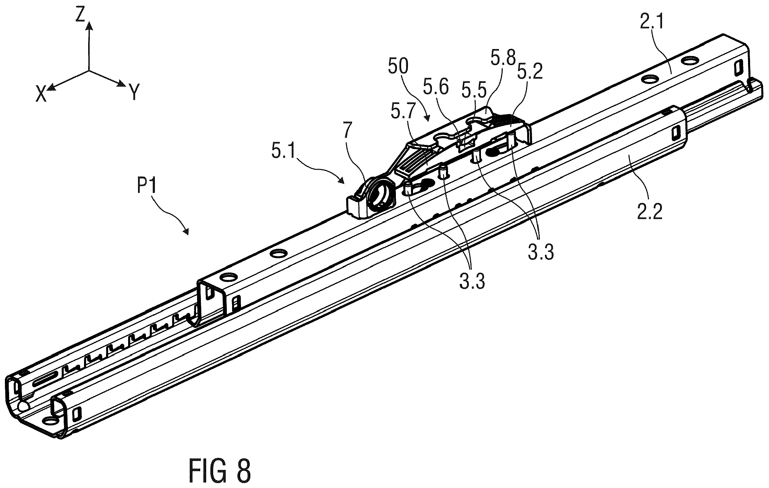

Das Positionierelement 5.2 ist außerhalb des Schienenprofils an einem außenliegenden Hebelende 5.3 des Auslösehebels 5 angeordnet. Das Positionierelement 5.2 ist derart ausgestaltet, dass es bei Betätigung des Betätigungsarms 4.1 die Schienenverriegelung 3, insbesondere die zwei Verriegelungselemente 3.1, in Bezug auf eine deren Endpositionen, insbesondere auf eine Entriegelungsachse EA einer Entriegelungsposition EP (Fig. 12) oder Verriegelungsachse VA einer Verriegelungsposition VP (Fig. 8) zentriert, das heißt symmetrisch einstellt und positioniert. Hierzu umfasst das jeweilige Verriegelungselement 3.1 ein Führungselement 3.3, das zum Entriegeln des jeweiligen Verriegelungselementes 3.1 in Eingriff mit dem Positionierelement 5.2 gelangt und zur Kippwinkelbegrenzung der Verriegelungselemente 3.3 beim Entriegeln oder Verriegeln vorgesehen ist. Das Führungselement 3.3 ist beispielsweise als ein Bolzen oder Stift ausgebildet.

Das Positionierelement 5.2 ist am außenliegenden freien Hebelende 5.3 des Auslösehebels 5 angelenkt. Das Positionierelement 5.2 ist insbesondere schwenkbeweglich gelagert. Darüber hinaus ist das Positionierelement 5.2 als eine Wippe ausgebildet. Auch kann das Positionierelement 5.2 als ein zweiarmiger Hebel ausgebildet sein. Hierbei ist das jeweilige Wippenende (oder Hebelarm) des Positionierelements 5.2 einem Verriegelungselement 3.1 zugeordnet.

Im Ausführungsbeispiel ist das Positionierelement 5.2 als eine im Wesentlichen dreieckförmige Platte oder Scheibe ausgebildet und weist eine mittige Gelenkachse 5.5 auf, um welche das Positionierelement 5.2 schwenkbar ist. Das Positionierelement 5.2 ist in Form einer Wippe, insbesondere einer scheiben- oder plattenförmigen Wippe, ausgebildet.

Die scheibenförmige Wippe weist eine im Wesentlichen Dreiecksform oder Pyramidenstumpfform auf. Eine der Dreiecksecken ist abgeflacht ausgebildet und schwenkbeweglich am Auslösehebel 5 gelagert. Die beiden anderen Dreiecksecken oder Wippenenden bilden die Auflage auf die Schienenverriegelung 3, insbesondere auf die zwei Verriegelungselemente 3.1.

Das Positionierelement 5.2 ist aus Kunststoff gebildet. Das Positionierelement 5.2 ist aus einem festen, insbesondere verstärktem Kunststoff in Kombination mit einem elastischen Material, insbesondere einem Elastomer, gebildet.

Das Positionierelement 5.2 ist als ein Zweikomponenten-Spritzgussbauteil ausgebildet.

Dabei weist das Positionierelement 5.2 ein innenliegendes elastisches Material 5.2.1 auf, das von einem festen Kunststoffmaterial 5.2.2 umgeben ist. Hierdurch ist das Positionierelement 5.2 aufgrund des festen Kunststoffmaterials 5.2.2 zur Sicherstellung der Entriegelungskräfte und aufgrund des elastischen Materials 5.2.1 oder Elastomers zur Dämpfung von Ver- oder Entriegelungsgeräuschen ausgebildet.

Die Gelenkachse 5.5 des Positionierelementes 5.2 ist im Bereich des innenliegenden elastischen Materials 5.2.1 ausgebildet, das einen Anbindungsbereich 5.6 aufweist, mittels welchen das Positionierelement 5.2 form- oder kraftschlüssig am Auslösehebel 5 befestigbar, insbesondere vormontierbar ist.

Korrespondierend zum Anbindungsbereich 5.6 weist der Auslösehebel 5 einen Kopplungsbereich 5.7 auf. Beispielsweise sind der Anbindungsbereich 5.6 des Positionierelements 5.2 und der Kopplungsbereich 5.7 des Auslösehebels 5 derart ausgebildet, dass eine Steck-Rastverbindung zwischen diesen gebildet ist. Somit kann das Positionierelement 5.2 durch Aufstecken und Verrasten an dem Auslösehebel 5 vormontiert werden, der außerhalb des Innenraums I der Sitzschienen 2.1, 2.2 angeordnet ist.

Der Betätigungsmechanismus 4 weist im Anbindungsbereich 5.6 des Positionierelementes 5.2 eine Auslöseabdeckung 5.8 auf. Die Auslöseabdeckung 5.8 weist innenseitig eine an die Außenkontur des Positionselementes 5.2 korrespondierende Innenkontur auf. Die Auslöseabdeckung 5.8 ist in Form eines Bügels ausgebildet, dessen Bügelenden form- oder kraftschlüssig in Ausnehmungen in der oberen Sitzschiene 2.1 eingreifen, insbesondere einrasten. Die Auslöseabdeckung 5.8 kann derart ausgebildet sein, dass diese die Schienenfestigkeit der oberen Sitzschiene 2.1 erhöht.

Die obere Sitzschiene 2.1 weist zur Auslösung der Schienenverriegelung 3 keine Öffnungen in den Seitenwänden auf. Dies erhöht die Schienenfestigkeit.

Der Anbindungsbereich 5.1 und der Auslösehebel 5 sind zur Kopplung des Betätigungsarmes 4.1 mit der Schienenverriegelung 3 vorgesehen, so dass ein herkömmlicher zusätzlicher Entriegelungshebel für die Schienenverriegelung 3 entfallen kann.

Zur Entriegelung beider Schienenpaare P1 und P2 und aus Symmetriegründen sind, wie in Figur 1 gezeigt, zwei Auslösehebel 5 vorgesehen, die mittels des einen Betätigungsarms 4.1 miteinander verbunden sind. Dabei ist der Betätigungsarm 4.1 mit einer Querstange 4.2 versehen, deren Enden in den Öffnungen 5.4 drehbar gelagert sind. Die Querstange 4.2 weist zumindest im Bereich der freien Enden einen runden Querschnitt auf.

Ein solcher symmetrischer Aufbau des Schienensystems 2 und des Betätigungsmechanismus 4 mit identischen Auslösehebeln 5 in den Schienenpaaren P1, P2 führt zu einer Variantenreduzierung infolge mehrerer Gleichteile und somit zu einer kostengünstigen Produktion.

Durch den außen liegenden Betätigungsmechanismus 4 und den außen liegenden Auslösemechanismus 5.0 und die innen liegende Schienenverriegelung 3 sind Fehlauslösungen minimiert. Zudem kann ein gemeinsamer außen liegender Betätigungsarm 4.1 für beide außen liegenden Auslösehebel 5 des Auslösemechanismus 5.0 und beide Schienenverriegelungen 3 genutzt werden. Zudem können der Betätigungsarm 4.1, der Auslösehebel 5 und das Positionierelement 5.2 als eine Montageeinheit M vormontiert werden. Die Auslöseabdeckung 5.8 ist beispielsweise mit der oberen Schiene 2.1 fest verbunden, zum Beispiel vernietet, verschraubt, verlötet, etc. Der Betätigungsarm 4.1, der Auslösehebel 5 und das Positionierelement 5.2 sind fest miteinander verbunden, zum Beispiel verschweißt.

Der Auslösehebel 5 ist einteilig aus Metall oder Kunststoff oder als ein Hybrid-Bauteil aus Metall und Kunststoff gebildet.

Der Auslösehebel 5 bildet ein Kraftübertragungselement zur Übertragung und Transformation der Drehung des Betätigungsarms 4.1 in eine Vertikalbewegung der Schienenverriegelung 3 zu deren Entriegelung. Der Auslösehebel 5 und die Anbindung des Betätigungsarms 4.1 sind derart gestaltet, dass der Drehpunkt D des Betätigungsarms 4.1 im Bereich der oberen Schiene 2.1 gebildet ist.

Dabei kann der Betätigungsarm 4.1 als ein am Auslösehebel 5 eingreifender Bedienhebel mit einer Querstange 4.2 aus Metall oder aus Kunststoff ausgebildet sein. Alternativ kann der Betätigungsarm auch als ein u-förmiger Bügel oder als einteiliger Querbügel aus Kunststoff oder Metall ausgebildet sein.

Zur Vermeidung von Klappergeräuschen und zur selbsttätigen Halterung des Betätigungsmechanismus 4 in der Passiv- oder Ruhestellung ist dieser federvorgespannt am Schienensystem 2 gehalten. Hierzu ist ein Federelement 8, zum Beispiel eine Bügelfeder, eine Schenkelfeder oder Schraubenfeder, zwischen dem Betätigungsmechanismus 4 und der oberen Schiene 2.1 angeordnet und spannt dabei den Betätigungsmechanismus 4 in der Ruhe- oder Passivstellung vor. Beispielsweise ist ein Ende des Federelements 8 am Betätigungsarm 4.1 oder an einem der Auslösehebel 5 angeordnet, insbesondere angelegt. Das andere Ende des Federelements 8 ist an der oberen Schiene 2.1 angelegt.

Die obere Schiene 2.1 weist zumindest zwei Durchgangsöffnungen 9 auf, durch welche die Schienenverriegelung 3 geführt und an der Schiene 2.1 befestigt ist. Des Weiteren weist die obere Schiene 2.1 eine Schlitzöffnung 10 zur Aufnahme des Anbindungsbereiches 5.1 des Betätigungsmechanismus 4 auf.

In den Seitenwänden weist die obere Schiene 2.1 zu Verriegelungszähnen 11 der Verriegelungselemente 3.1 korrespondierende Verriegelungsöffnungen oder Schienenöffnungen 2.3 auf.

**Figuren 2 bis 6** zeigen schematisch in vergrößerter Darstellung den Betätigungsmechanismus 4 im Bereich eines Auslösemechanismus 5.0 mit der Auslöseabdeckung 5.8.

**Figur 2** zeigt die Schienenverriegelung 3 in einer Verriegelungsposition VP, in welcher die Verriegelungszähne 11 der Verriegelungselemente 3.1 in die Schienenöffnungen 2.3 die beiden Schienen 2.1, 2.2 sperrend eingreifen. Dabei ist der Auslösemechanismus 5.0, insbesondere das Positionierelement 5.2 noch nicht im Eingriff an den Führungselementen 3.3 der Verriegelungselemente 3.1.

Der Auslösemechanismus 5.0 umfasst je Schienenpaar P1, P2 zumindest den Auslösehebel 5 und das Positionierelement 5.2.

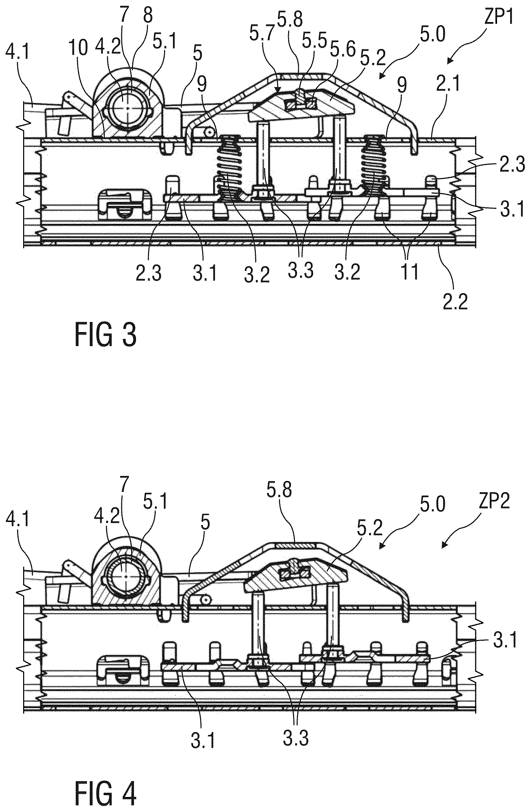

**Figur 3** zeigt die Schienenverriegelung 3 beim Auslösen des Auslösemechanismus 5.0. Bedingt durch die unterschiedlichen, insbesondere gestuften Verriegelungspositionen ragen die Führungselemente 3.3 unterschiedlich hoch durch die Durchgangsöffnungen 9 heraus. Die Führungselement 3.3 sind durch die Durchgangsöffnungen 9 hindurch freibeweglich geführt.

Das Führungselement 3.3 des jeweils spielfreistellenden Verriegelungselementes 3.1 ragt höher aus der Durchgangsöffnung heraus. Die Verriegelungsmechanik ist in der internationalen Patentanmeldung WO 2016/062592 A1 näher beschrieben. Insbesondere greifen die Verriegelungselemente 3.1 zur Verriegelung von Ober- und Unterschiene 2.1, 2.2 stufenweise sperrend in diese ein, wobei in einer Vorverriegelungsstufe die Verriegelungselemente 3.1 die Ober- und Unterschiene 2.1, 2.2 mit einem Spiel zueinander vorverriegeln und in einer Verriegelungsstufe zumindest eine der Verriegelungen 3.1 die Ober- und Unterschiene 2.1, 2.2 spielfrei (ohne Spiel) miteinander verriegelt.

Das wippenförmige Positionierelement 5.2 gleicht die unterschiedlich hoch herausragenden Führungselemente 3.3 aufgrund der schwenkbaren Lagerung aus und kommt in Kontakt mit beiden Führungselementen 3.3.

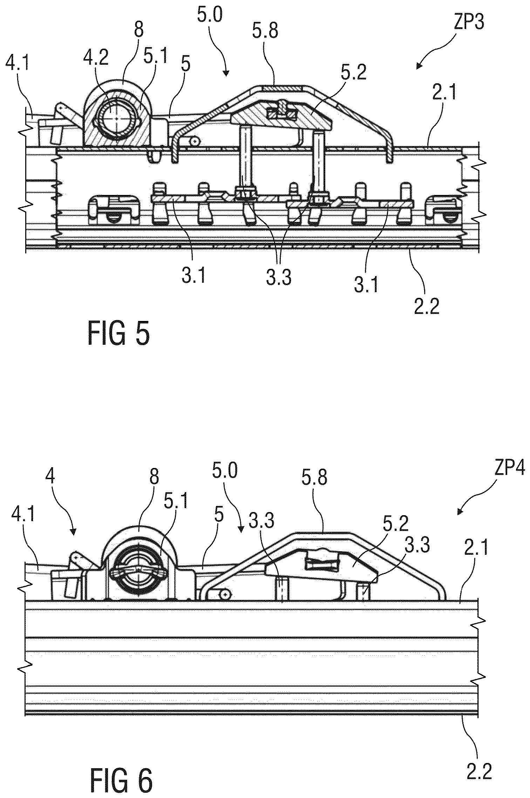

**Figuren 4** **und** **5** zeigen jeweils das Positionierelement 5.2 als Ausgleichswippe, die in Figur 4 an eine Winkel- oder Schwenkbegrenzung anschlägt für ein hinteres Verriegelungselement 3.1 mit erhöhter Entriegelungskraft und in Figur 5 an eine Winkel- oder Schwenkbegrenzung anschlägt für ein vorderes Verriegelungselement 3.1 mit erhöhter Entriegelungskraft.

**Figur 6** zeigt eine Seitenansicht des Betätigungsmechanismus 4 in Kombination mit dem Auslösemechanismus 5.0, umfassend den außenseitigen Auslösehebel 5 und das wippenförmige Positionierelement 5.2, das bei Betätigung des Betätigungsarmes 4.1 an den Führungselementen 3.3 eingreift.

**Figuren 2 bis 6** zeigen einen Entriegelungsablauf bei Betätigung des Betätigungsarms 4.1.

Das wippenförmige Positionierelement 5.2 ist derart ausgestaltet, dass es bei Betätigung des Betätigungsarms 4.1 die zwei Verriegelungselemente 3.1 in Bezug auf die Verriegelungsposition VP gemäß **Figur 2** zentriert und weitgehend auf eine Gerade entlang einer Verriegelungsachse VA einstellt.

**Figuren 3 bis 6** zeigen Zwischenpositionen ZP1 bis ZP4 beim Entriegeln der Verriegelungselemente 3.1, in welchen diese aufgrund der unterschiedlich hohen Entriegelungskräfte in eine Schrägstellung in Bezug auf eine gerade Längsachse LA gestellt werden. Hierzu weisen die Durchgangsöffnungen 9 einen größeren Durchmesser auf als die Durchmesser der Führungselemente 3.3. Auch können die Durchgangsöffnungen 9 unrund, insbesondere oval oder schlitzförmig, ausgebildet sein. Dabei sind die Führungselemente 3.3 und die Durchgangsöffnungen 9 derart korrespondierend zueinander eingerichtet, dass eine Kippwinkelbegrenzung der Verriegelungselemente 3.1 bewirkt ist.

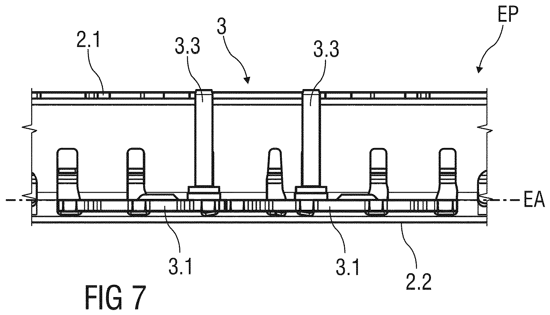

**Figur 7** zeigt die Verriegelungselemente 3.1 in der Entriegelungsposition EP, in welcher diese im Wesentlichen auf einer Geraden entlang der Entriegelungsachse EA mittels des Positionierelementes 5.2, das mit den Führungselementen 3.3 zusammenwirkt, zentriert, das heißt symmetrisch eingestellt und positioniert sind.

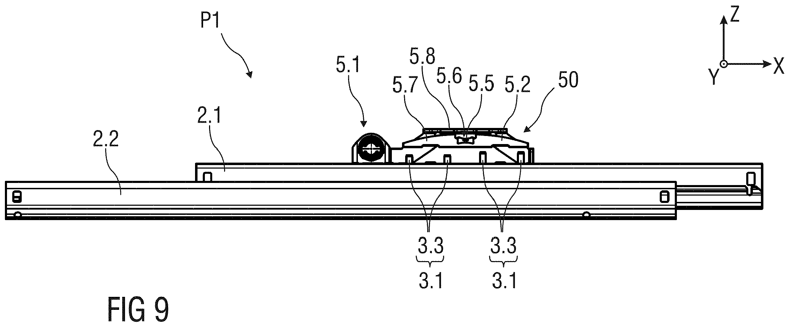

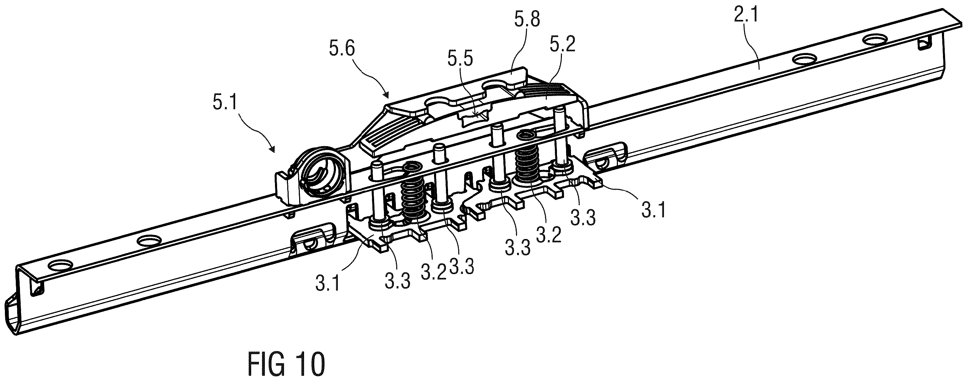

**Figuren 8 bis 10** zeigen eine weitere Ausführungsform eines alternativen Auslösemechanismus 50 für den oben beschriebenen Betätigungsmechanismus 4.

Der Auslösemechanismus 50 ist für das Schienenpaar P1 dargestellt. Der Auslösemechanismus 50 für das andere Schienenpaar P2 ist analog aufgebaut.

Der Auslösemechanismus 50 unterscheidet sich vom Auslösemechanismus nach Figuren 2 bis 7 in der Anzahl der Führungselemente 3.3. Anstelle von einem Führungselement 3.3 je Verriegelungselement 3.1 weist der Auslösemechanismus 50 je Verriegelungselement 3.1 zwei Führungselemente 3.3 auf. Hierdurch sind das Positionierelement 5.2 und die Auslöseabdeckung 5.8 lediglich in der Längsausdehnung verlängert.

Der Auslösemechanismus 50 ist ohne den Auslösehebel 5 dargestellt.

Ansonsten sind die Komponenten des Betätigungsmechanismus 4 und der Schienenverriegelung 3 analog zu den Komponenten nach dem Ausführungsbeispiel in Figuren 2 bis 7 aufgebaut.

Die beiden Führungselemente 3.3 des jeweiligen Verriegelungselementes 3.1 sind in Längsausdehnung voneinander beabstandet angeordnet. Zwischen den beiden Führungselementen 3.3 eines jeden Verriegelungselementes 3.1 ist die Feder 3.2, insbesondere eine Rückstellfeder, angeordnet.

Die Führungselemente 3.3 der beiden Verriegelungselemente 3.1 sind dabei derart von der Rotationsachse oder Gelenkachse 5.5 des Positionierelementes 5.2 beabstandet, dass sich das Positionierelement 5.2 beim Entriegeln selbst zentriert.

Das wippenförmige Positionierelement 5.2 gleicht die unterschiedlich hoch herausragenden Führungselemente 3.3 aufgrund der schwenkbaren Lagerung des Positionierelementes 5.2 aus und kommt während der Entriegelung in Kontakt mit allen Führungselementen 3.3 aller Verriegelungselemente 3.1.

Bei der Entriegelung über einen der Führungselemente 3.3 einer der Verriegelungselemente 3.1 würde dieses zunächst bedingt durch den Abstand von der Feder 3.2, einer Rückstell-, insbesondere einer Zugfeder, zur Betätigung bis an die Kippwinkelbegrenzung verkippen und dann bis zu dem Kontakt des ersten Verriegelungszahnes 11 mit dem Hubbegrenzungsanschlag in der Oberschiene 2.1 in Entriegelungsrichtung ER verschoben werden. Von diesem Punkt an wären deutlich höhere Entriegelungskräfte erforderlich, um das Verriegelungselement 3.1 und damit die Rastplatte komplett an die Hubbegrenzungsanschläge zu drücken.

Durch die Verwendung des zweiten Führungselementes 3.3 je Verriegelungselement 3.1 (zum Beispiel Rastplatte) werden die beiden Verriegelungselemente 3.1 bedingt durch das Kraftgleichgewicht nahezu parallel entriegelt und gleichzeitig an den Hubanschlag in der Oberschiene 2.1 gedrückt.

Bedingt durch die unterschiedlich großen Abstände der Führungselemente 3.3, zum Beispiel Pins, eines jeden Verriegelungselements 3.1 von der Rotationsachse oder Gelenkachse 5.5 des Positionierelementes 5.2 kommt es während des Entriegelungsvorganges zu einer Selbstzentrierung des insbesondere wippenförmigen Positionierelementes 5.2. Dies ermöglicht ein nahezu synchrones Erreichen der jeweiligen Endposition, insbesondere der Verriegelungsposition VP oder Entriegelungsposition EP.

Dieses synchrone Erreichen der Endpositionen (Verriegelungsposition VP oder Entriegelungsposition EP) bewirkt einen möglichst großen Überhub. Der Überhub wird von der gerade entriegelten Verriegelungsposition VP zur vollständig entriegelten Entriegelungsposition EP gemessen. Ein Winkelanschlag im Positionierelement 5.2 ist hierdurch nicht erforderlich.

Dabei sind die Führungselemente 3.3 benachbarter Verriegelungselemente 3.1 in einem gleichen Abstand zur Rotationsachse oder Gelenkachse 5.5 des Positionierelementes 5.2 angeordnet. Hierdurch werden die benachbarten Verriegelungselemente 3.1 weitgehend synchron entriegelt.

**Figur 8 bis 10** zeigen das Positionierelement 5.2 als Ausgleichswippe, die an eine Winkel- oder Schwenkbegrenzung anschlägt für ein vorderes Verriegelungselement 3.1 mit erhöhter Entriegelungskraft.

### Bezugszeichenliste

- 1: Längseinsteller
- 2: Schienensystem
- 2.1, 2.2: Schienen
- 2.3: Schienenöffnung
- 3: Schienenverriegelung
- 3.1: Verriegelungselemente
- 3.2: Feder
- 3.3: Führungselement
- 4: Betätigungsmechanismus
- 4.1: Betätigungsarm
- 4.2: Querstange
- 5: Auslösehebel
- 5.0, 50: Auslösemechanismus
- 5.1: Anbindungsbereich
- 5.2: Positionierelement
- 5.2.1: elastisches Material
- 5.2.2: festes Kunststoffmaterial
- 5.3: Hebelende
- 5.4: Öffnung
- 5.5: Gelenkachse
- 5.6: Anbindungsbereich
- 5.7: Kopplungsbereich
- 5.8: Auslöseabdeckung
- 6: Aussparung
- 7: Lagerbuchse
- 8: Federelement
- 9: Durchgangsöffnung
- 10: Schlitzöffnung
- 11: Verriegelungszähne
- D: Drehpunkt
- EA: Entriegelungsachse
- ER: Entriegelungsrichtung
- EP: Entriegelungsposition
- I: Innenraum
- LA: Längsachse
- M: Montageeinheit
- P1, P2: Schienenpaar
- VA: Verriegelungsachse
- VP: Verriegelungsposition
- X: Längsrichtung
- ZP1 bis ZP4: Zwischenposition

## Patentansprüche

1. Betätigungsmechanismus (4) für einen Längseinsteller (1) eines Fahrzeugsitzes, umfassend zumindest einen Betätigungsarm (4.1), einen Auslösehebel (5) und ein am Auslösehebel (5) angeordnetes Positionierelement (5.2), das an einem freien Hebelende des Auslösehebels (5) schwenkbeweglich gelagert ist, wobei das Positionierelement (5.2) als ein Zweikomponenten-Bauteil ausgebildet ist und ein innenliegendes elastisches Material (5.2.1) aufweist, das von einem festen Kunststoffmaterial (5.2.2) umgeben ist, wobei das Positionierelement (5.2) im Bereich des innenliegenden elastischen Materials (5.2.1) einen Anbindungsbereich (5.6) aufweist, mittels welchem das Positionierelement (5.2) form- oder kraftschlüssig am Auslösehebel (5) befestigbar ist.

2. Betätigungsmechanismus (4) nach Anspruch 1, wobei das Positionierelement (5.2) in Form einer Wippe ausgebildet ist.

3. Betätigungsmechanismus (4) nach einem der vorhergehenden Ansprüche, wobei der Betätigungsarm (4.1), der Auslösehebel (5) und das Positionierelement (5.2) zu einer Montageeinheit (M) vormontierbar sind.

4. Längseinsteller (1) für einen Fahrzeugsitz, umfassend eine obere Schiene (2.1) und eine untere Schiene (2.2), die mittels mindestens zweier Verriegelungselemente (3.1) miteinander verriegelbar sind, und einen Betätigungsmechanismus (4) nach einem der Ansprüche 1 bis 3 zur Betätigung der Verriegelungselemente (3.1).

5. Längseinsteller (1) nach Anspruch 4, wobei das Positionierelement (5.2) außerhalb der Schienen (2.1, 2.2) angeordnet ist und mit mindestens einem im Innenraum (I) zwischen den Schienen (2.1, 2.2) angeordneten Führungselement (3.3) im Wirkzusammenhang steht.

6. Längseinsteller (1) nach Anspruch 4 oder 5, wobei die Verriegelungselemente (3.1) beim Entriegeln oder Verriegeln mittels des Führungselements (3.3) in der oberen Schiene (2.1) gegen ein Verkippen zwangsgeführt werden.

7. Längseinsteller (1) nach einem der Ansprüche 4 bis 6, wobei je Verriegelungselement (3.1) zwei Führungselemente (3.3) vorgesehen sind.

8. Längseinsteller (1) nach Anspruch 7, wobei die Führungselemente (3.3) des jeweiligen Verriegelungselementes (3.1) derart von einer Rotations- oder Gelenkachse (5.5) des Positionierelementes (5.2) beabstandet sind, dass sich das Positionierelement (5.2) beim Entriegeln selbst zentriert.

9. Fahrzeugsitz mit einem Längseinsteller (1) nach einem der Ansprüche 4 bis 8.

## Claims

1. Actuation mechanism (4) for a longitudinal adjuster (1) of a vehicle seat, comprising at least one actuation arm (4.1), one release lever (5) and one positioning element (5.2) which is arranged on the release lever (5) and is mounted pivotably on a free lever end of the release lever (5), wherein the positioning element (5.2) is in the form of a two-component part and has an inner elastic material (5.2.1) which is surrounded by a high-strength plastic material (5.2.2), wherein, in the region of the inner elastic material (5.2.1), the positioning element (5.2) has an attachment region (5.6) by means of which the positioning element (5.2) is able to be fastened in a form- or force-fitting manner to the release lever (5).

2. Actuation mechanism (4) according to Claim 1, wherein the positioning element (5.2) is in the form of a rocker.

3. Actuation mechanism (4) according to either of the preceding claims, wherein the actuation arm (4.1), the release lever (5) and the positioning element (5.2) are able to be preassembled to form an assembly unit (M).

4. Longitudinal adjuster (1) for a vehicle seat, comprising an upper rail (2.1) and a lower rail (2.2) which are able to be locked to one another by means of at least two locking elements (3.1), and an actuation mechanism (4) according to one of Claims 1 to 3 for actuation of the locking element (3.1) .

5. Longitudinal adjuster (1) according to Claim 4, wherein the positioning element (5.2) is arranged outside the rails (2.1, 2.2) and interacts with at least one guide element (3.3) which is arranged in the interior space (I) between the rails (2.1, 2.2).

6. Longitudinal adjuster (1) according to Claim 4 or 5, wherein, during unlocking or locking, the locking elements (3.1) are forcibly guided in a tilt-preventing manner in the upper rail (2.1) by means of the guide element (3.3).

7. Longitudinal adjuster (1) according to one of Claims 4 to 6, wherein two guide elements (3.3) are provided for each locking element (3.1).

8. Longitudinal adjuster (1) according to Claim 7, wherein the guide elements (3.3) of the respective locking element (3.1) are spaced apart from an axis of rotation or axis of articulation (5.5) of the positioning element (5.2) in such a way that, during unlocking, the positioning element (5.2) centres itself.

9. Vehicle seat having a longitudinal adjuster (1) according to one of Claims 4 to 8.

## Revendications

1. Mécanisme d'actionnement (4) pour un dispositif de réglage longitudinal (1) d'un siège de véhicule, comprenant au moins un bras d'actionnement (4.1), un levier de déclenchement (5) et un élément de positionnement (5.2) agencé sur le levier de déclenchement (5), qui est monté à pivotement sur une extrémité de levier libre du levier de déclenchement (5), l'élément de positionnement (5.2) étant réalisé sous la forme d'une pièce à deux composants et présentant un matériau élastique intérieur (5.2.1) qui est entouré d'un matériau plastique solide (5.2.2), l'élément de positionnement (5.2) présentant, dans la zone du matériau élastique intérieur (5.2.1), une zone de liaison (5.6) au moyen de laquelle l'élément de positionnement (5.2) peut être fixé par complémentarité de forme ou par adhérence au levier de déclenchement (5).

2. Mécanisme d'actionnement (4) selon la revendication 1, dans lequel l'élément de positionnement (5.2) est réalisé sous la forme d'une bascule.

3. Mécanisme d'actionnement (4) selon l'une quelconque des revendications précédentes, dans lequel le bras d'actionnement (4.1), le levier de déclenchement (5) et l'élément de positionnement (5.2) peuvent être prémontés en une unité de montage (M).

4. Dispositif de réglage longitudinal (1) pour un siège de véhicule, comprenant un rail supérieur (2.1) et un rail inférieur (2.2), qui peuvent être verrouillés entre eux au moyen d'au moins deux éléments de verrouillage (3.1), et un mécanisme d'actionnement (4) selon l'une quelconque des revendications 1 à 3 pour actionner les éléments de verrouillage (3.1).

5. Dispositif de réglage longitudinal (1) selon la revendication 4, dans lequel l'élément de positionnement (5.2) est agencé à l'extérieur des rails (2.1, 2.2) et est en relation fonctionnelle avec au moins un élément de guidage (3.3) agencé dans l'espace intérieur (I) entre les rails (2.1, 2.2).

6. Dispositif de réglage longitudinal (1) selon la revendication 4 ou 5, dans lequel les éléments de verrouillage (3.1) sont guidés de manière forcée contre un basculement dans le rail supérieur (2.1) au moyen de l'élément de guidage (3.3) lors du déverrouillage ou du verrouillage.

7. Dispositif de réglage longitudinal (1) selon l'une quelconque des revendications 4 à 6, dans lequel deux éléments de guidage (3.3) sont prévus pour chaque élément de verrouillage (3.1).

8. Dispositif de réglage longitudinal (1) selon la revendication 7, dans lequel les éléments de guidage (3.3) de l'élément de verrouillage respectif (3.1) sont espacés d'un axe de rotation ou d'articulation (5.5) de l'élément de positionnement (5.2) de telle sorte que l'élément de positionnement (5.2) se centre de lui-même lors du déverrouillage.

9. Siège de véhicule avec un dispositif de réglage longitudinal (1) selon l'une quelconque des revendications 4 à 8.
